# EUROPÄISCHE PATENTSCHRIFT

(11) **EP 0 592 855 B1**
(45) Veröffentlichungstag und Bekanntmachung des Hinweises auf die Patenterteilung: **17.01.1996**
(21) Anmeldenummer: 93115535.2
(22) Anmeldetag: 27.09.1993
(51) Int. Cl.: B60J 1/20

(54) **Sonnenblende für Fahrzeuge**
Sun visor for motor vehicles
Pare-soleil pour véhicules

(30) Priorität: 15.10.1992 DE 4234741
(43) Veröffentlichungstag der Anmeldung: 20.04.1994
(73) Patentinhaber: GEBR. HAPPICH GmbH, D-42097 Wuppertal (DE)
(72) Erfinder: Viertel, Lothar, D-66802 Altforweiler (DE); Welter, Patrick, F-57730 La Chambre (FR); Stricher, Gabriel, F-57660 Laning (FR); Cauchois, Didier, F-57880 Guerting (FR)

(56) Entgegenhaltungen:
- EP-A- 0 455 844
- DE-C- 4 014 057
- GB-A- 2 205 794

## Beschreibung

Die Erfindung bezieht sich auf eine Sonnenblende für Fahrzeuge, insbesondere zur Anordnung hinter einer Seitenscheibe eines Kraftwagens, mit einem Sonnenblendenkörper, der oberseitig an einer Profilleiste und unterseitig an einem Federstab befestigt ist und der aus einer kompakten Nichtgebrauchslage nach Art eines aufspreizbaren Fächers in eine flächig ausgebreitete Gebrauchslage überführbar ist, wobei ein Endbereich des Federstabs verschiebefest an dem einen Endbereich der Profilleiste befestigt ist.

Eine Sonnenblende der gattungsgemäßen Art ist in der DE-C-40 14 057 gezeigt. Mit dieser bekannten Sonnenblende soll vornehmlich ein oberer vorderer Eckbereich der Fensteröffnung einer Seitentür oberhalb eines Spiegeldreiecks abgeschirmt werden. Oftmals ist es aber erwünscht, daß ein relativ breiter oberer Randbereich einer Seitenscheibe, insbesondere im der B-Säule eines Fahrzeugs benachbarten Bereich großflächig abgeschirmt werden, denn bekanntermaßen ist der Kopf eines Fahrzeugführers oder vorderen Beifahrers dem hinteren Bereich der Fensteröffnung einer vorderen Seitentür näher benachbart als dem vorderen Eckbereich der Fensteröffnung. Bei einer nur den vorderen Eckbereich der Fensteröffnung abschirmenden Sonnenblende bleiben Fahrzeugführer und Beifahrer gegen seitliche Sonneneinstrahlung weitgehend ungeschützt.

Der Erfindung liegt daher die Aufgabe zugrunde, eine Sonnenblende der eingangs genannten Art so weiterzubilden, daß eine Seitenscheibe vornehmlich im hinteren Bereich eine möglichst großflächige Abschirmung erhält, um einen Fahrzeugführer und/oder Beifahrer gegen seitlich ins Fahrzeug einfallende Sonneneinstrahlung zu schützen.

Zur Lösung dieser Aufgabe sind die im Anspruch 1 angegebenen Merkmale vorgesehen. Die besonderen Vorteile der Erfindung werden darin gesehen, daß ein absolut wirksamer Schutz gegen seitliche Sonneneinstrahlung durch nur einen Hebelgriff erzielt werden kann.

Die Weiterbildung der Erfindung nach Anspruch 2 bietet den Vorteil, den oberen Randbereich einer Seitenscheibe horizontal durchlaufend abschirmen zu können, um auf diese Weise z. B. den Fahrzeugführer zum einen durch seitlich von vorn und zum anderen nur von der Seite her einfallende Sonneneinstrahlung zu schützen.

Der Gegenstand der Erfindung besteht aus nur wenigen Teilen, ist einfach in der Herstellung, weist eine kompakte Ausbildung auf, ist leicht zu montieren und ist, nicht zuletzt, einfach zu handhaben.

Vorteilhafte Ausgestaltungen und zweckmäßige Weiterbildungen der Erfindung sind in den weiteren Unteransprüchen angegeben.

Ein Ausführungsbeispiel der Erfindung wird nachfolgend anhand der Zeichnung näher erläutert. Es zeigen:
- Fig. 1: eine Sonnenblendenanordnung mit in der Gebrauchsstellung befindlichem Sonnenblendenkörper im eingebauten Zustand,

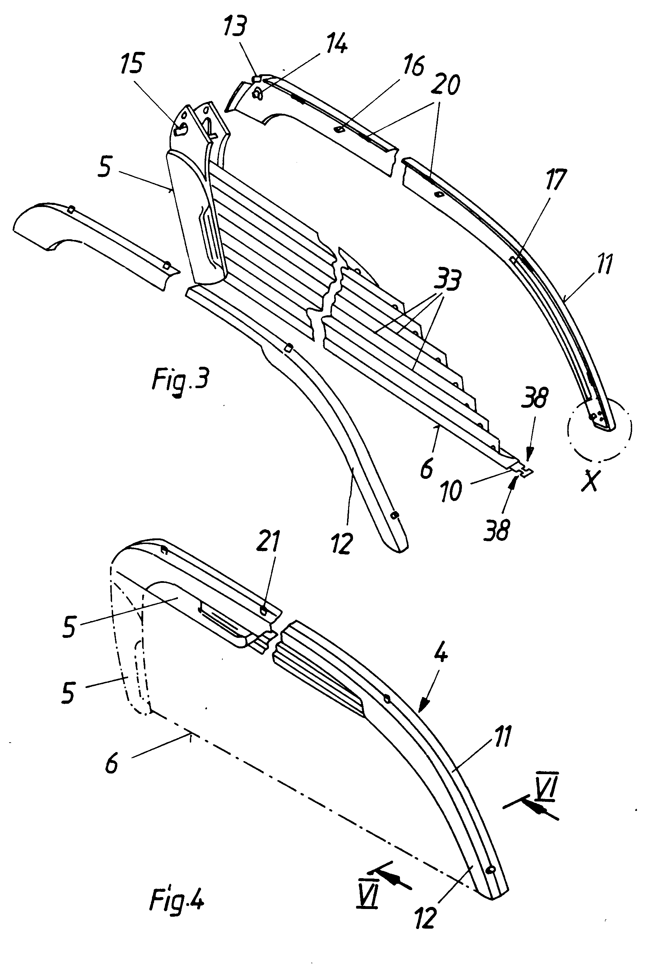

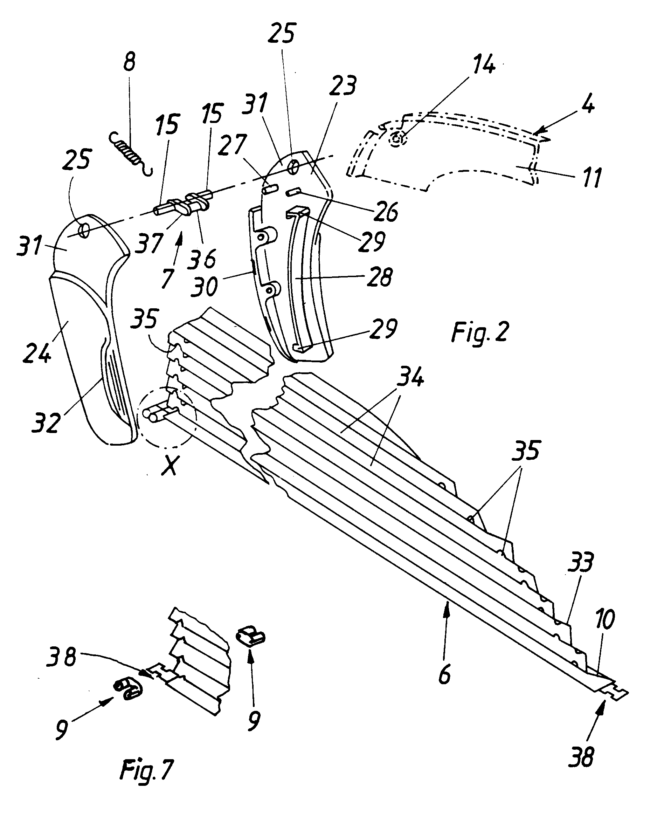

- Fig. 2: eine perspektivische Explosivdarstellung der Sonnenblende,
- Fig. 3: eine weitere, ergänzende perspektivische Explosivdarstellung der Sonnenblende,
- Fig. 4: die Sonnenblende nach den Fig. 2 und 3 nach dem Zusammenfügen der Einzelteile,

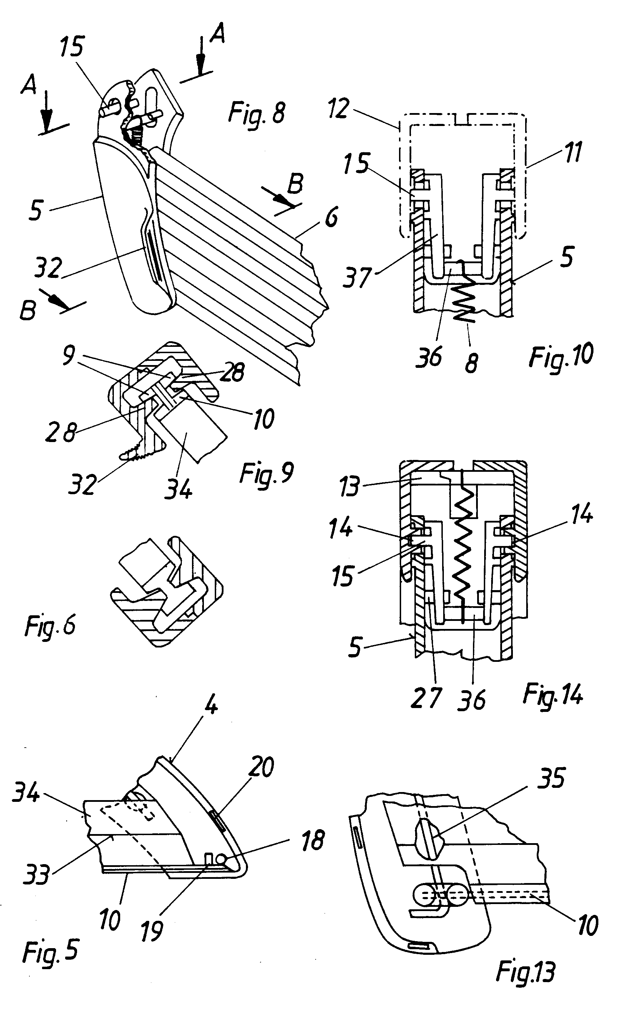

- Fig. 5: eine Einzelheit X nach Fig. 3,
- Fig. 6: einen Schnitt VI - VI nach Fig 4,
- Fig. 7: eine Einzelheit X nach Fig. 2 in Explosivdarstellung,
- Fig. 8: einen Teilbereich der Sonnenblende mit Schwenkhebel,
- Fig. 9: einen Schnitt B - B nach Fig. 8,
- Fig. 10: einen Schnitt A - A nach Fig. 8,
- Fig. 11: den schwenkhebelseitigen Endbereich der Sonnenblende in der Gebrauchsstellung dargestellt,
- Fig. 12: den schwenkhebelseitigen Endbereich der Sonnenblende in der Nichtgebrauchsstellung dargestellt,
- Fig. 13: eine Einzelheit X nach Fig. 11 und
- Fig. 14: einen Schnitt D - D nach Fig. 11.

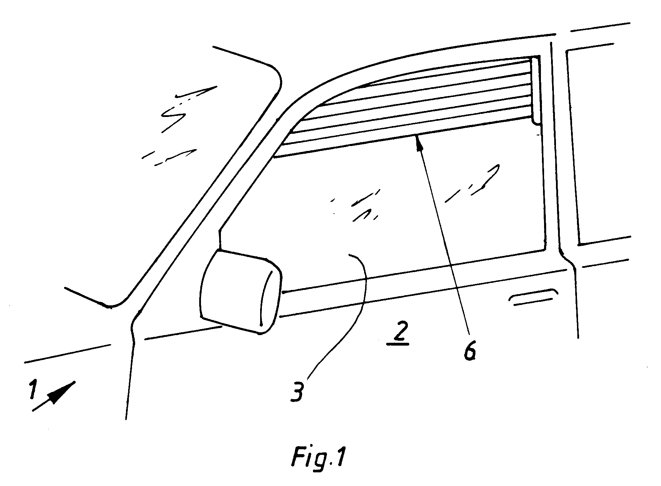

Fig. 1 zeigt ein Fahrzeug 1 mit einer Seitentür 2 und einer Seitenscheibe 3, deren oberer Randbereich mit der neuen Sonnenblende relativ breitflächig abgeschirmt ist.

Die neue Sonnenblende besteht aus einer Profilleiste 4, einem Schwenkhebel 5, einem Sonnenblendenkörper 6, einem Pleuel 7, einer Zugfeder 8, zwei Gleitelementen 9 und einem Federstab 10.

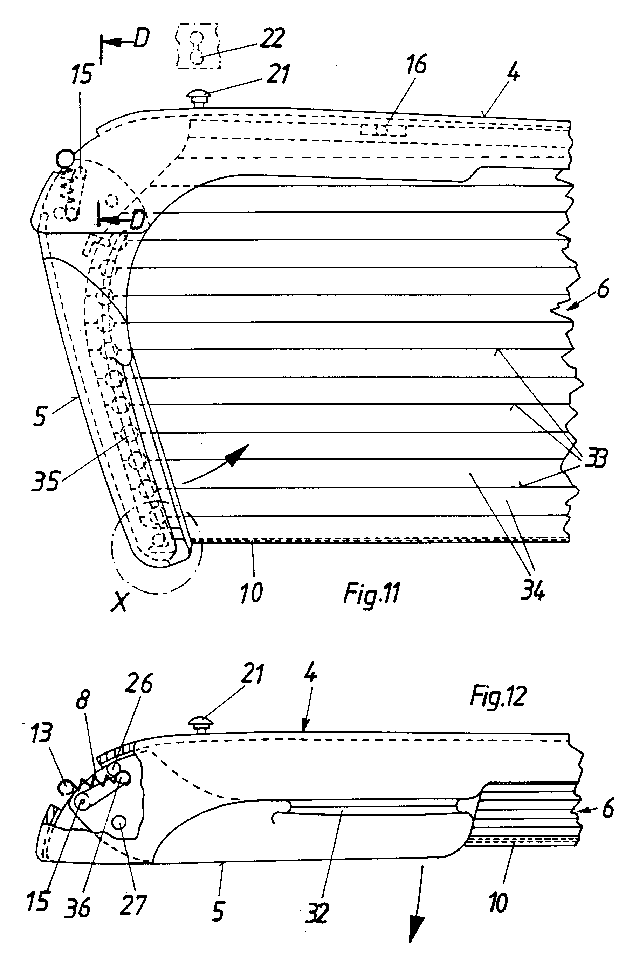

Die Profilleiste 4 ist als Schiene mit U-förmigem Querschnitt ausgebildet und weist bevorzugt, wie dargestellt, einen gekrümmten Endbereich auf, um dem Konturverlauf des oberen Rahmenprofils der Seitentür 2 zu folgen. Die Profilleiste 4 ist in der Längsebene geteilt und besteht aus zwei als Kunststoff-Spritzgußteile ausgebildeten Hälften 11 und 12. Die Hälften 11 und 12 weisen jeweils einen Aufnahmezapfen 13 für ein Ende der Zugfeder 8, Lageraufnahmen 14 für die Pleuelzapfen 15, Zapfen 16 und Führungsstege 17 für die Halterung des Sonnenblendenkörpers 6 sowie Zapfen 18 und Stege 19 für die einendige Halterung des Federstabs 10 auf. Ferner sind an den Hälften 11 und 12 Schweißzonen 20 ausgebildet, um die Hälften 11, 12 nach dem Zuammenbau der Sonnenblende durch bevorzugt Ultraschallschweißen aneinander festzulegen. An der oberen Abschlußwandung der Profilleiste 4 sind noch Zapfen 21 mit Pilzkopf zum einfachen Festlegen der Sonnenblende am Türrahmen der Fahrzeugtür 2 angeformt (vgl. hierzu das in Fig. 11 strichpunktiert dargestellte Lochbild 22).

Der Schwenkhebel 5 weist ebenfalls einen U-förmigen Querschnitt auf und weiterhin ist auch der Schwenkhebel 5 in der Längsebene geteilt und aus zwei Hälften 23, 24 zusammengesetzt. Jede als Kunststoff-Spritzgußteil ausgebildete Schwenkhebelhälfte 23, 24 ist mit einer Lagerbohrung 25 für den Durchlaß der Pleuelzapfen 15 sowie mit angeformten Zapfen 26, 27, die jeweils wechselweise als Mitnahme- oder Anschlagzapfen für den Pleuel 7 dienen und mit einem, sich in Längsrichtung des Schwenkhebels 5 erstreckenden Führungssteg 28, der beidendig durch Anschläge 29 begrenzt ist, versehen. Ferner sind an den Hälften 23, 24 Schweißzonen 30 sowie abgesetzte, in die Profilleiste 4 eingreifende Endlappen 31 ausgebildet. Die Hälfte 24 weist darüber hinaus eine angeformte Griffzone 32 auf.

Der Sonnenblendenkörper 6 besteht aus dem Abschnitt bzw. Formstanzling eines Kunststoff-Extrusionskörpers mit als Filmscharniere ausgebildeten Fächerknickstellen 33 zwischen den Fächerlamellen 34. Die Fächerlamellen 34 liegen in der Nichtgebrauchslage der Sonnenblende (Fig. 12) plan aufeinander, während sie in der Gebrauchsstellung der Sonnenblende zick-zack-förmig zueinander verlaufen. Bei der Herstellung des Sonnenblendenkörper-Stanzlings erhält dieser oberseitig einen der Profilleiste 4 angepaßten Verlauf und fernerhin Freischnitte 35, die längs des der Profilleiste 4 benachbarten Randbereichs sowie längs des dem Schwenkhebel benachbarten Randbereichs vorgesehen sind. Die Freischnitte 35 sind im Bereich der Fächerknickstellen 33 mit Abstand nebeneinander angeordnet und kreuzen die Fächerknickstellen 33.

Der Pleuel 7 kann aus einem Kunststoff-Spritzling bestehen, der die Pleuelzapfen 15 und hierzu parallel verlaufend einen Pleuelsteg 36 zum einendigen Einhängen der Zugfeder 8 aufweist. Die die Pleuelzapfen 15 mit dem Pleuelsteg 36 verbindenden Laschen 37 wirken mit den Zapfen 26, 27 zusammen.

Der Federstab 10 ist zweckmäßigerweise aus einem Federstahlbandabschnitt gebildet und an seinen freien die Fächerlamellen beidseitig überragenden Enden mit U-förmigen Ausklinkungen 38 versehen. Der Federstab 10 ist der untersten Fächerlamelle z. B. durch eine Klebeverbindung zugeordnet. An der dem Schwenkhebel 5 zugewandten Seite trägt der Federstab 10 die Gleitelemente 9 im Bereich der U-förmigen Ausklinkungen 38.

Bevor die beiden Hälften 11 und 12 der Profilleiste 4 und die beiden Hälften 23 und 24 des Schwenkhebels 5 Ultraschall verschweißt werden, müssen die Sonnenblendeneinzelteile eingefügt werden. Dazu wird zunächst jeweils eine Hälfte von Profilleiste 4 und Schwenkhebel 5 mit den Teilen bestückt, und zwar durch Eindrücken des Pleuelzapfens 15 durch die Lagerbohrung 25 hindurch in die Lageraufnahme 14, durch Aufdrücken der Freischnitte 35 des Sonnenblendenkörpers 6 auf die Zapfen 16 und Führungsstege 17, 28, durch Aufdrücken eines Gleitelements 9 auf den Führungssteg 28 usw.. Nach dem Zusammenschweißen der genannten Hälften liegt eine einbaufertige Sonnenblende vor. Dabei hängt die Zugfeder einendig am Pleuelsteg 36 und anderendig am Aufnahmezapfen 13. Das den Gleitelementen 9 abgewandte Ende des Federstabs 10 untergreift die Zapfen 18, während gleichzeitig die Stege 19 in die U-förmigen Ausklinkungen 38 eingreifen.

Die Sonnenblende kann durch bloßes Schwenkhebelbetätigen aus der Nichtgebrauchslage (Fig. 12) in die Gebrauchslage (Fig. 11) wie auch umgekehrt überführt werden. Beim Verschwenken des Schwenkhebels 5 nach unten, wird durch den oberen Zapfen 26 im Schwenkhebel der Pleuel 7 nach unten gedrückt, wobei die Zugfeder 8 gespannt wird. Nach einem gewissen Schwenkweg springt der Pleuel 7 über den sogenannten Totpunkt auf den zweiten Zapfen 27 und zieht den Schwenkhebel 5 in die untere Endstellung, in der sich der Sonnenblendenkörper 6 in der Gebrauchsstellung befindet, da der Sonnenblendenkörper bei der Schwenkbewegung durch die im Schwenkhebel 5 angeordneten Führungsstege 28 und Gleitelemente 9 zwangsweise mitgeführt wird.

Der mit der unteren Fächerlamelle 34 verbundene Federstab bewirkt beim Schließen des Fächers eine konvexe Durchbiegung mit Druck und bewirkt, daß im geschlossenen Zustand durch die Gesamtkonzeption, Zugfeder 8, Pleuel 7, Lagerstellen und Drehbewegung Schwenkhebel 5 die konvexe Formgebung herbeigeführt wird und der Fächer in der geschlossenen Stellung in dieser Formgebung verharrt.

## Patentansprüche

1. Sonnenblende für Fahrzeuge, insbesondere zur Anordnung hinter einer Seitenscheibe eines Kraftfahrzeugs, mit einem Sonnenblendenkörper (6), der oberseitig an einer Profilleiste (4) und unterseitig an einem Federstab (10) befestigt ist und der aus einer kompakten Nichtgebrauchslage nach Art eines aufspreizbaren Fächers in eine fläching ausgebreitete Gebrauchslage überführbar ist, wobei ein Endbereich des Federstabs (10) verschiebefest an dem einen Endbereich der Profilleiste (4) befestigt ist, dadurch gekennzeichnet, daß an dem anderen Endbereich der Profilleiste (4) ein Schwenkhebel (5) angelenkt ist, der einen sich in dessen Längsrichtung erstreckenden Führungssteg (28) aufweist, daß an dem Führungssteg (28) der Federstab (10) mit einem Endbereich verschiebebeweglich aufgenommen ist, daß der Sonnenblendenkörper (6) durch Schwenken des in der Ausgangsstellung an der Profilleiste (4) anliegenden Schwenkhebels (5) aufspreizbar ist und daß Mittel vorgesehen sind, um den Schwenkhebel (5) zu halten, wenn sich der Sonnenblendenkörper (6) in der Gebrauchs- bzw. Nichtgebrauchslage befindet.

2. Sonnenblende nach Anspruch 1, dadurch gekennzeichnet, daß die Profilleiste (4) an dem anderen, dem Schwenkhebel (5) abgewandten Endbereich entsprechend dem Konturverlauf des oberen Rahmenprofils einer Fahrzeugtür (1) gekrümmt ist und daß der Sonnenblendenkörper (6) oberseitig eine diesem Konturverlauf entsprechenden Beschnitt aufweist.

3. Sonnenblende nach Anspruch 1 oder 2, dadurch gekennzeichnet, daß die Drehlagerachse für die Anlenkung des Schwenkhebels (5) an der Profilleiste (4) aus einem Pleuel (7) besteht, daß am Schwenkhebel (5) zwei Zapfen (26, 27) angeordnet sind, die beim Schwenken des Schwenkhebels (5) jeweils wechselweise als Mitnahme- bzw. Anschlagzapfen für den Pleuel (7) dienen und daß eine Zugfeder (8) einendig am Pleuel (7) und anderendig an der Profilleiste (4) befestigt ist, die durch Schwenken des Schwenkhebels (5) spannbar und jeweils über die Totpunktlage hinweg bewegbar ist, um den Pleuel (7) in Anschlagslage an jeweils einem der Zapfen (26, 27) zu halten.

4. Sonnenblende nach wenigstens einem der Ansprüche 1 bis 3, dadurch gekennzeichnet, daß die Profilleiste (4) einen U-förmigen Querschnitt aufweist, in der Längsebene geteilt ist und aus zwei als Kunststoff-Spritzgußteile ausgebildeten Hälften (11, 12) mit daran einstückig angeformten Elementen zur Halterung der Feder (8), der Pleuelzapfen (15), eines Federstabendes und des Sonnenblendenkörpers (6) zusammengesetzt ist.

5. Sonnenblende nach wenigstens einem der Ansprüche 1 bis 4, dadurch gekennzeichnet, daß der Schwenkhebel (5) einen U-förmigen Querschnittt aufweist, in der Längsebene geteilt ist und aus zwei als Kunststoff-Spritzgußteile ausgebildete Hälften (23, 24) zusammengesetzt ist, wobei sich im Innern des Schwenkhebels (5) der Führungssteg (28) für den Federstab (10) und die Zapfen (26, 27) für den Pleuel (7) einstückig angeformt sowie das eingesetzte Pleuel (7), die eingehängte Zugfeder (8), ein Endbereich des Federstabs (10) und eine Seitenwand des Sonnenblendenkörpers (6) befinden.

6. Sonnenblende nach wenigstens einem der Ansprüche 1 bis 5, dadurch gekennzeichnet, daß der im Schwenkhebel (5) befindliche Führungssteg (28) aus zwei Einzelstegen besteht, zwischen deren gegeneinander gerichteten Längsrändern eine Schlitzöffnung ausgebildet ist und daß die Einzelstege von am schwenkhebelseitigen Endbereich des Federstabs (10) befestigten Gleitelementen (9) umgriffen sind.

7. Sonnenblende nach wenigstens einem der Ansprüche 1 bis 6, dadurch gekennzeichnet, daß der Sonnenblendenkörper (6) aus dem Abschnitt eines extrudierten Kunststoffkörpers besteht und als Filmscharniere ausgebildete Fächerknickstellen (33) aufweist.

8. Sonnenblende nach wenigstens einem der Ansprüche 1 bis 7, dadurch gekennzeichnet, daß der Sonnenblendenkörper (6) zum Befestigen desselben an der Profilleiste (4) und am Schwenkhebel (5) längs seines der Profilleiste (4) benachbarten Randbereichs sowie längs seines dem Schwenkhebel (5) benachbarten Randbereichs in die Knickfalten (33) gelegte und diese kreuzende Freischnitte (35) aufweist, in welche die an der Profilleiste (4) angeformten Halterungselemente (16, 17) bzw. die am Schwenkhebel (5) angeformten Einzelstege (28) eingreifen.

9. Sonnenblende nach wenigstens einem der Ansprüche 1 bis 8, dadurch gekennzeichnet, daß die Hälften (11, 12) der Profilleiste (4) sowie die Hälften (23, 24) des Schwenkhebels (5) miteinander verschweißt sind.

10. Sonnenblende nach wenigstens einem der Ansprüche 1 bis 9, dadurch gekennzeichnet, daß am Schwenkhebel (5) eine Griffzone (32) ausgebildet ist.

## Claims

1. Sun visor for vehicles, especially for arrangement behind a side window of a motor car, having a sun visor body (6) which is attached on the top side to a profile strip (4) and on the bottom side to a spring rod (10) and which can be transferred out of a compact non-usage position in the manner of an expandable fan into a usage position in which it is extended in a planar fashion, one end region of the spring rod (10) being attached in a displacement-secure manner to the one end region of the profile strip (4), characterized in that to the other end region of the profile strip (4) there is coupled a pivot lever (5), which has a guide web (28) extending in its longitudinal direction, in that on the guide web (28) the spring rod (10) is received such that it is displaceably movable with one end region, in that the sun visor body (6) is expandable by pivoting of the pivot lever (5), which bears in the original setting against the profile strip (4), and in that means are provided in order to hold the pivot lever (5) when the sun visor body (6) is in the usage or non-usage position.

2. Sun visor according to Claim 1, characterized in that the profile strip (4), at the other end region facing away from the pivot lever (5), is curved in accordance with the contour path of the upper frame profile of a vehicle door (1), and in that the sun visor body (6) has on the top side a cut corresponding to this contour path.

3. Sun visor according to Claim 1 or 2, characterized in that the pivot bearing axle for the coupling of the pivot lever (5) to the profile strip (4) comprises a connecting rod (7), in that on the pivot lever (5) there are disposed two pins (26, 27), which, upon pivoting of the pivot lever (5), in each case serve alternately as driver pins and stop pins for the connecting rod (7), and in that a tension spring (8) is attached at one end to the connecting rod (7) and at the other end to the profile strip (4), which tension spring can be tensioned by pivoting of the pivot lever (5) and can respectively be moved over the dead centre position in order to hold the connecting rod (7) in the stop position on one of the pins (26, 27) respectively.

4. Sun visor according to at least one of Claims 1 to 3, characterized in that the profile strip (4) has a U-shaped cross-section, is divided in the longitudinal plane and is composed of two halves (11, 12), configured as plastics injection-moulded parts, with elements moulded in one piece thereon for holding the spring (8), the connecting-rod pins (15), a spring rod end and the sun visor body (6).

5. Sun visor according to at least one of Claims 1 to 4, characterized in that the pivot lever (5) has a U-shaped cross-section, is divided in the longitudinal plane and is composed of two halves (23, 24) configured as plastics injection-moulded parts, on the inside of the pivot lever (5) there being moulded on, in one piece, the guide web (28) for the spring rod (10) and the pins (26, 27) for the connecting rod (7), and there being therein located the inserted connecting rod (7), the suspended tension spring (8), an end region of the spring rod (10) and a side wall of the sun visor body (6).

6. Sun visor according to at least one of Claims 1 to 5, characterized in that the guide web (28) located in the pivot lever (5) comprises two individual webs, between whose mutually facing longitudinal margins there is configured a slot opening, and in that the individual webs are embraced by sliding elements (9) attached to the end region, on the pivot lever side, of the spring rod (10).

7. Sun visor according to at least one of Claims 1 to 6, characterized in that the sun visor body (6) comprises the offcut of an extruded plastics body and has fan kinks (33) configured as film hinges.

8. Sun visor according to at least one of Claims 1 to 7, characterized in that the sun visor body (6), for its attachment to the profile strip (4) and to the pivot lever (5), has along its marginal region adjacent to the profile strip (4) and along its marginal region adjacent to the pivot lever (5) clearance cuts (35), which are placed into the kink folds (33) and cross these and into which the holding elements (16, 17) moulded onto the profile strip (4) and the individual webs (28) moulded onto the pivot lever (5) engage.

9. Sun visor according to at least one of Claims 1 to 8, characterized in that the halves (11, 12) of the profile strip (4) and the halves (23, 24) of the pivot lever (5) are welded together.

10. Sun visor according to at least one of Claims 1 to 9, characterized in that on the pivot lever (5) there is configured a gripping zone (32).

## Revendications

1. Pare-soleil pour véhicules, en particulier destiné à être disposé derrière une vitre latérale d'un véhicule automobile, avec un corps de pare-soleil (6) qui est fixé à sa partie supérieure à une baguette profilée (4) et à sa partie inférieure à une barre à ressort (10) et que l'on peut faire passer d'une position compacte de non utilisation, à la façon d'un éventail pouvant être déployé, dans une position d'utilisation étendue à plat, dans lequel une zone d'extrémité de la barre à ressort (10) est attachée fixement à l'une des zones d'extrémité de la baguette profilée (4), caractérisé en ce qu'à l'autre zone d'extrémité de la baguette profilée (4) est articulé un levier pivotant (5) qui présente une nervure de guidage (28) s'étendant dans sa direction longitudinale, en ce que la barre à ressort (10) est reçue avec une zone d'extrémité mobile à coulissement contre la nervure de guidage (28), en ce que le corps de pare-soleil (6) peut être déployé par pivotement du levier pivotant (5) appliqué contre la baguette profilée (4) dans la position de départ, et en ce que des moyens sont prévus pour retenir le levier pivotant (5) lorsque le corps de pare-soleil (6) se trouve dans la position d'utilisation, respectivement de non-utilisation.

2. Pare-soleil selon la revendication 1, caractérisé en ce que la baguette profilée (4) est courbée suivant le contour du profil du cadre supérieur d'une porte de véhicule (1), à l'autre zone d'extrémité éloignée du levier pivotant (5), et en ce que le corps de pare-soleil (6) présente, à sa partie supérieure, un découpage correspondant à ce contour.

3. Pare-soleil selon la revendication 1 ou 2, caractérisé en ce que l'axe du coussinet de pivotement pour l'articulation du levier pivotant (5) à la baguette profilée (4) se compose d'une bielle (7), en ce que sur le levier pivotant (5) sont disposés deux tourillons (26, 27) chacun servant alternativement de tourillons d'entraînement, respectivement de butée pour la bielle (7) lors du pivotement du levier pivotant (5), et en ce qu'un ressort de traction (8) est fixé par une extrémité à la bielle (7) et par l'autre extrémité à la baguette profilée (4), ce ressort pouvant être tendu par le pivotement du levier pivotant (5) et chaque fois déplacé vers l'avant par la position de point mort, afin de retenir la bielle (7) dans la position de butée contre chacun des tourillons (26, 27).

4. Pare-soleil selon au moins l'une des revendications 1 à 3, caractérisé en ce que la baguette profilée (4) présente une section transversale en forme de U, est divisée dans le plan longitudinal et est composée de deux moitiés (11, 12) conçues en tant que pièces de plastique moulées par injection, comprenant des éléments formés d'une pièce dans celles-ci pour retenir le ressort (8), les tourillons de bielle (15), une extrémité de la barre à ressort et le corps de pare-soleil (6).

5. Pare-soleil selon au moins l'une des revendications 1 à 4, caractérisé en ce que le levier pivotant (5) présente une section transversale en forme de U, est divisé dans le plan longitudinal et est composé de deux moitiés (23, 24) conçues en tant que pièces de plastique moulées par injection, la nervure de guidage (28) pour la barre à ressort (10) et les tourillons (26, 27) pour la bielle (7) formés d'une pièce ainsi que la bielle utilisée (7), le ressort de traction suspendu (8), une zone d'extrémité de la barre à ressort (10) et une paroi latérale du corps de pare-soleil (6) se trouvent à l'intérieur du levier pivotant (5).

6. Pare-soleil selon au moins l'une des revendications 1 à 5, caractérisé en ce que la nervure de guidage (28) se trouvant dans le levier pivotant (5) est constituée de deux nervures individuelles, entre les bords longitudinaux opposés desquelles est formée une ouverture à fente et en ce que les nervures individuelles sont enveloppées par des éléments coulissants (9) fixés à la zone d'extrémité de la barre à ressort (10) du côté du levier pivotant.

7. Pare-soleil selon au moins l'une des revendications 1 à 6, caractérisé en ce que le corps de pare-soleil (6) est constitué par la section d'un corps en plastique extrudé, et présente des joints articulés (33) pour éventail conçus en tant que bandes d'articulation.

8. Pare-soleil selon au moins l'une des revendications 1 à 7, caractérisé en ce que le corps de pare-soleil (6), pour sa fixation à la baguette profilée (4) et au levier pivotant (5) le long de sa zone latérale voisine de la baguette profilée (4) et le long de sa zone latérale voisine du levier pivotant (5) présente des découpes (35) placées dans et croisant les joints articulés (33), dans lesquelles viennent en prise les éléments de retenue (16, 17) formés sur la baguette profilée (4), respectivement les nervures individuelles (28) formées sur le levier pivotant (5).

9. Pare-soleil selon au moins l'une des revendications 1 à 8, caractérisé en ce que les moitiés (11, 12) de la baguette profilée (4) ainsi que les moitiés (23, 24) du levier pivotant (5) sont soudées entre elles.

10. Pare-soleil selon au moins l'une des revendications 1 à 9, caractérisé en ce qu'une zone de préhension (32) est formée sur le levier pivotant (5).
